# EUROPEAN PATENT SPECIFICATION

(11) **EP 0 514 161 B1**
(45) Date of publication and mention of the grant of the patent: **27.11.1996**
(21) Application number: 92304335.0
(22) Date of filing: 14.05.1992
(51) Int. Cl.: B29D 30/06

(54) **Metal mould for vulcanizing a tyre and method for making the same**
Metallische Form zur Vulkanisierung eines Reifens und Verfahren zu deren Herstellung
Moule métallique pour la vulcanisation d'un pneumatique et méthode pour sa fabrication

(30) Priority: 17.05.1991 JP 140749/91
(43) Date of publication of application: 19.11.1992
(73) Proprietor: BRIDGESTONE CORPORATION, Tokyo 104 (JP)
(72) Inventor: Katsumata, Shiro, Higashiyamoto-shi, Tokyo (JP); Kata, Takehiro, Kodaira-shi, Tokyo (JP)
(74) Representative: Silverman, Warren

(56) References cited:
- EP-A- 0 451 832

## Description

This invention relates to an annular metal mould for vulcanizing and shaping an unvulcanized green tyre, and more particularly to an annular metal mould for such purpose, which is composed of a combination of metal sector moulds.

A metal tyre vulcanizing mould has various protrusion patterns formed on its concave mould surface to match the required groove pattern of a tyre tread portion to be formed by pressing a green tyre onto this metal mould surface. At the time of pressing a green tyre onto a metal mould surface, there is a tendency for air to be trapped between the metal mould surface and the green tyre. Since a pattern of protrusions is formed on a metal mould surface, these protrusions act to prevent escape of air and a tyre is produced which, as a result of such trapped air, has bares (recesses) on the tyre surface. As a result, the commercial value of the tyre is much reduced.

Therefore, it has been a common practice to divide an annular metal mould into a plurality of component parts and to remove trapped air by making use of gap clearances between adjacent component parts and thereby prevent production of bares. In this case, each of the metal sector moulds formed by dividing an annular metal mould around its circumference is formed of component parts herein termed subsidiary parts and the annular metal mould to be used in practice is constructed by assembling these metal sector moulds, each formed from a plurality of such subsidiary parts.

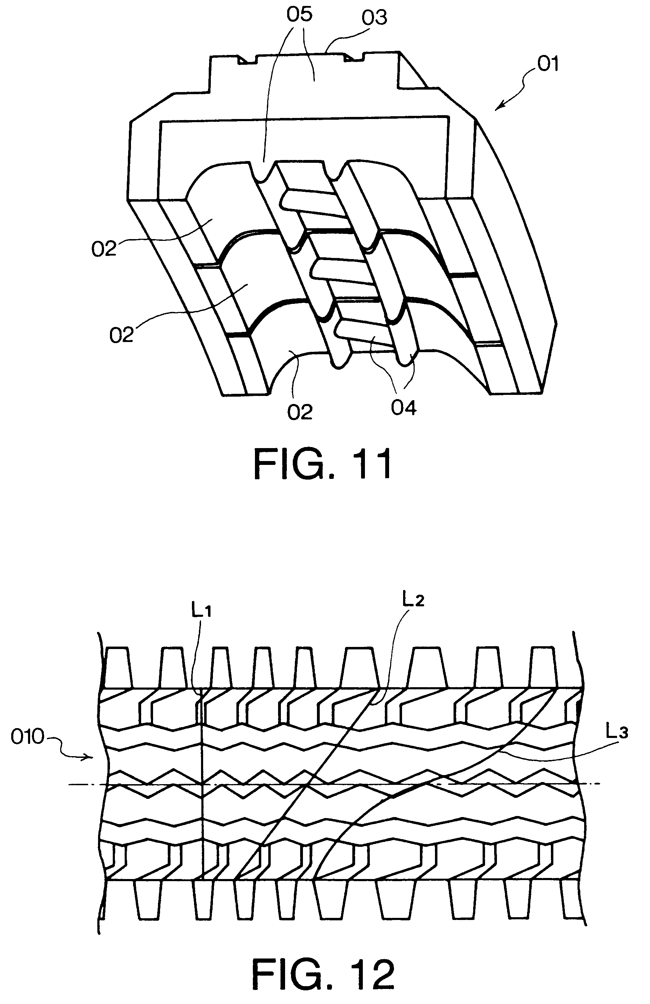

For instance, with a tyre vulcanizing metal mould of the type disclosed in Laid-Open Japanese Utility Model Specification No. 2-17311 (1990), and shown in Figure 11 of the accompanying drawings hereto, a number of subsidiary parts 02, in this case three in number is assembled with the rear surfaces of each being supported by a reinforcement part 03 to form one metal sector mould 01. These sector metal moulds 01 are assembled into an annular form to make up an annular metal mould. On the surface of the metal mould are formed protrusions 04, and the tread pattern of a tyre is formed from this protrusion pattern.

In this tyre vulcanizing metal mould, the subsidiary parts 02 are given their shape by cutting and dividing up by severing an annular metal mould along planes passing through the axis of the tyre. The cutting surfaces between subsidiary parts must be such that upon pressing a green tyre, air may not be trapped by the protrusion pattern. A consideration here is that cuts should not be made at locations which result in cutting of the protrusions so that portions thereof exist which are thin-walled and liable to be broken. The cuts should also avoid blades to be formed as part of the protrusion pattern.

Accordingly, if a protrusion pattern is complicated, as shown in Figure 12 of the accompanying drawings and disclosed in Laid-Open Japanese Patent Specification No. 56-58817 (1981), it becomes difficult to cut an annular metal mould 010 along any plane containing a tyre axis while avoiding cuts at undesirable locations, generally the mould must be cut along an oblique plane L₂ or a curved surface L₃ i.e. it is not possible to limit to planes L₁, which pass through the tyre axis.

In prior art example disclosed in the above referred Laid-Open Japanese Patent Specification No. 56-58817(1981), subsidiary parts of each sector mould are made by cutting an annular metal mould 010 at desired cutting positions into a desired cut shape by means of a wire cutting tool.

When assembling respective metal sector moulds 01 to form an annular metal mould respective radially outwardly opening sector metal moulds 01 are slid together towards their centre. It is because of this feature of the mould assembly that, in order that the sector metal moulds may be readily assembled with one another without difficulty, joining surfaces 05 of the respective sector metal moulds are themselves planes passing through the tyre axis as shown in Figure 11.

This is also the case with the sector mould shown in Figure 12 even though subsidiary parts cut into arbitrary shapes are employed. A subsidiary part providing joining surface 05 of the metal sector mould, is given a joining surface 05 which is planar and passing through the axis of the tyre, although the other surfaces at which subsidiary parts are brought together are formed into arbitrary shapes. Accordingly, such sector end subsidiary parts will have a different shape from the other subsidiary parts not providing a joining surface 05 between the metal sector moulds, as a result of which a variety of subsidiary parts has to be manufactured, manufacture becomes more labour intensive and hence costs are high.

If the joining surfaces between the metal sector moulds are formed in an arbitrary shape without restriction, there is the problem that upon assembling a plurality of sector metal moulds by making them slide towards a central position, protrusions and recesses at the opposed joining surfaces 05 may not line up well with each other and may mesh and interfere with each other, resulting in damage.

Furthermore, when subsidiary parts are manufactured by cutting an annular metal mould into desired shapes as is the case of the above-referred Laid-Open Japanese Patent Specification No. 56-58817 (1981), special tools such as a wire cutting tool or the like are necessitated. It is necessary to control the cutting operations by use of a special operational programme, and so, much labour is involved in the cutting work.

It is an object of the present invention to provide a metal mould for use in vulcanizing a tyre, in which a plurality of subsidiary parts are made all in the same shape and labour costs can be minimized, as well as a method for making the such mould.

This invention provides a metal mould for use in vulcanizing a tyre emplaced therein, the mould having an annular metal mould portion for forming the tread of a tyre and constructed by assembling a plurality of metal sector moulds around the circumference of the mould, the mould having all or some of said sector metal moulds constructed of a plurality of subsidiary parts separable from each other in the axial direction as well as the circumferential direction; characterised in that end surfaces of said plurality of subsidiary parts are formed as contour surfaces in arbitrary non-planar shapes extending across the mould to avoid severing any tyre tread-defining mould portion and at which surfaces said subsidiary parts are fitted together, said contour surfaces also defining joining surfaces between said metal sector moulds.

Since the joining surfaces of the metal sector moulds have the contours of the arbitrary non-planar shapes of the subsidiary parts, all the subsidiary parts can be formed in one such shape which will be such that bares will not be produced and damage to a pattern is not caused during formation of the parts. Moreover, since it is possible to manufacture all the subsidiary parts to be in the same shape, manufacturing, including labour costs, can be reduced significantly.

In the case where the joining surfaces between the metal sector moulds are curved surfaces, at every point on these curved surfaces the surface preferably has a radius of curvature of 5 mm or larger, and an inclination angle of a tangential plane with respect to the tyre axis which is limited to 80 degrees or less.

In addition, in the case where any one metal sector mould is constructed of a plurality of subsidiary parts and a reinforcement part integrally supports and reinforces these subsidiary parts, the position where a contour surface of a subsidiary part of one metal sector mould adjoins a contour surface of a subsidiary part of an adjacent metal sector mould is out of alignment with the position where a joining surface of a reinforcement part adjoins a joining surface of adjacent reinforcement part circumferentially adjacent thereto to an extent of 5 mm or less at any position therealong.

By limiting the configurations of the joining surfaces and the relative displacement between the joining surface of the subsidiary parts and the joining surface of the reinforcement parts in the above-described manner, upon assembling the metal sector moulds, the protrusions and recesses on the respective joining surfaces come together without interference, and hence damage thereto is not caused, and sliding movement in the radial direction can be achieved smoothly.

For a better understanding of the invention and to show how the same can be carried into effect, reference will now be made by way of example only, to the accompanying drawings, wherein:
Figure 1 is a plan view of an annular metal mould such as one embodying the present invention;
Figure 2 is a plan view showing metal sector moulds forming the same annular metal mould when displaced radially outwards;
Figure 3 is a front view of a metal sector mould of an annular metal mould embodying this invention;
Figure 4 is a cross-sectional view taken along line IV-IV in Figure 3;
Figure 5 is a front view of a subsidiary part; of the metal sector mould as Figure 4;
Figure 6 is a plan view of the same subsidiary part;
Figure 7 is a side view of the same subsidiary part;
Figure 8 is a rear view of the metal sector mould showing essential detail;
Figure 9 is a front view of another metal sector mould of an annular metal mould embodying the present invention;
Figure 10 is a cross-sectional view taken along line X-X in Figure 9;
   and, as previously described,
Figure 11 is a perspective view of a metal sector mould of annular metal mould of the prior art type; and
Figure 12 is a front view showing division lines of a metal mould of the prior art type.

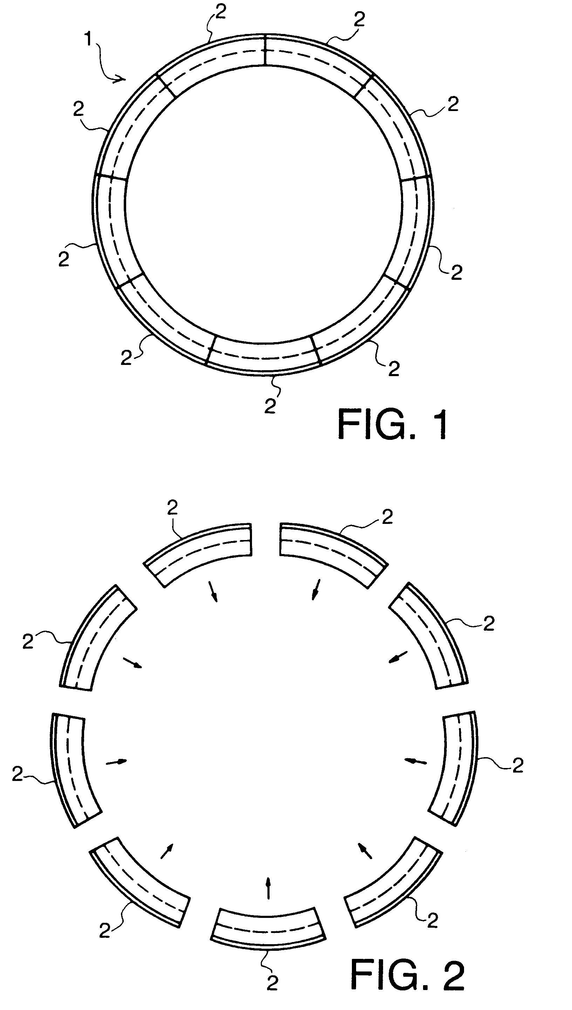

Figure 1 is a general plan view of an annular metal mould 1. The annular metal mould 1 is constructed of a plurality of metal sector moulds 2, which can slide radially outwardly to open the mould as shown in Figure 2. By making the respective metal sector moulds 2 in an opened state slide radially inwards, an annular metal mould 1 of annular shape, as shown in Figure 1, can be again formed.

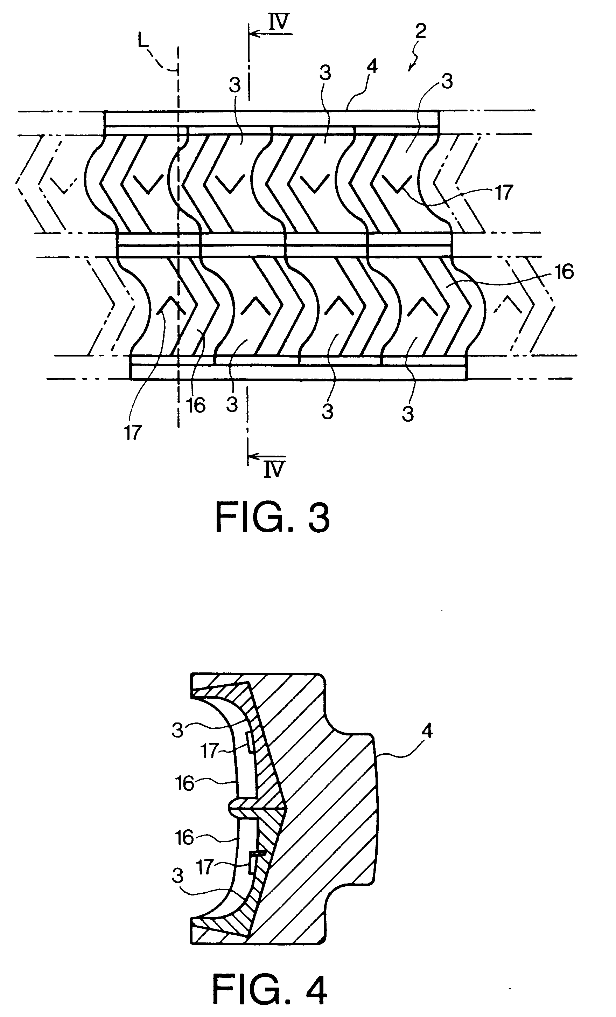

Each of the metal sector moulds 2 is formed of a plurality of subsidiary parts 3 and a reinforcement part 4 for rearwardly supporting an assembled plurality of the subsidiary parts 3 as shown in Figures 3 and 4.

The subsidiary parts 3 are arrayed in upper and lower levels, the abutting surfaces between vertically contiguous subsidiary parts 3 being planar while the abutting surfaces between horizontally contiguous smaller parts 3 form curved surfaces. The subsidiary parts 3 all have the same configuration and they are individually manufactured in a preliminary manufacturing step.

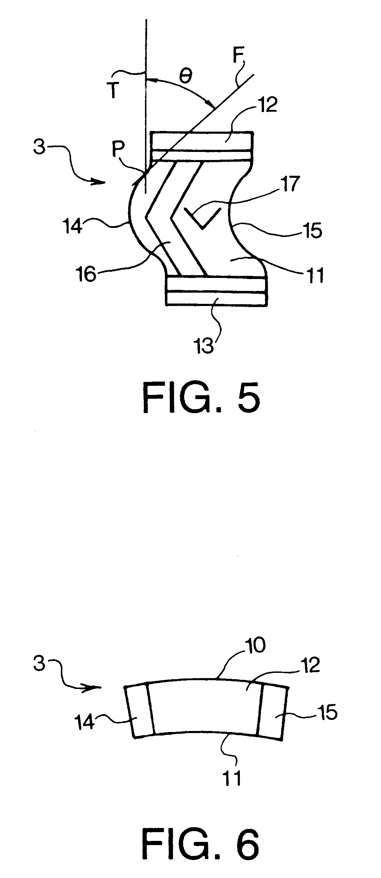

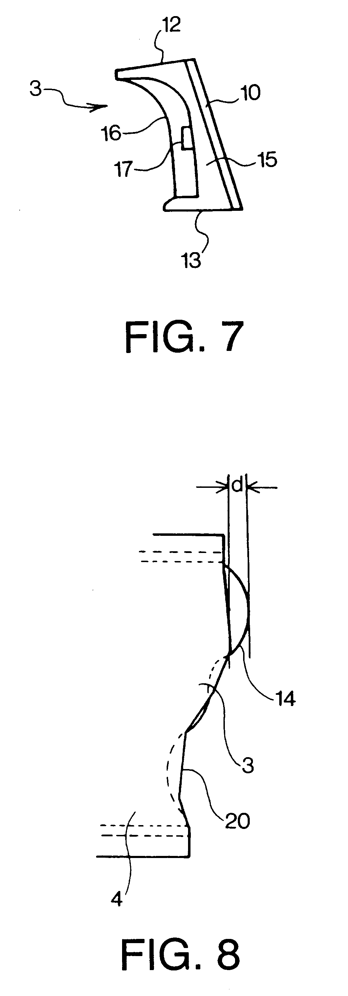

The configuration of the subsidiary parts 3 at the upper level is illustrated in Figures 5 to 7. The outer circumferential surface 10 of a subsidiary part 3 forms part of a cylindrical surface having its central axis aligned with the central axis of the annular metal mould 1 (Figure 6), and on its inner circumferential surface 11 is formed a protrusion pattern (Figure 5). Upper and lower surfaces 12, 13 of the subsidiary part 3 are not parallel to each other, but are planes inclined with respect to each other so as to converge towards the interior of the mould (Figures 4 and 7).

The side surfaces 14 and 15 respectively abutting against lefthand and righthand contiguous subsidiary parts are curved surfaces of matching shape, with the side surface 14 being convex and the side surface 15 being concave. These convex and concave surfaces respectively fit into corresponding concave and convex surfaces of adjacent subsidiary parts.

On the inner circumferential surface 11 of the subsidiary part 3 are provided protrusions 16 for forming the grooves of a tyre tread and blades 17, and thus a pattern is formed.

The left- and right-hand side surfaces 14 and 15 which provide contouring at the sides of the smaller part 3 are formed in an optimum curved configuration at selected positions for preventing formation of bares by the protrusion pattern while avoiding the positions of the above-described lug protrusions 16 and blades 17. Since no division plane severing a protrusion 16 or a blade 17 at its midway, as shown, for instance, as would be the case if division between subsidiary moulds took place at the position of the broken line in Figure 3, damage to protrusion 16 or a blade 17 can be prevented.

Furthermore, the curvature of surfaces forming the side surfaces 14 and 15 is chosen in such a manner that at every point on the side surfaces, the radius of curvature is 5 mm or larger. These curved surfaces are chosen in such manner that the inclination angle of a plane tangential to the curved surface with respect to the centre axis of the annular metal mould 1, that is the axis of a tyre to be mounted to this metal mould, is 80 degrees or less at every point on these curved surfaces. In Figure 5, reference character F denotes a tangential plane at a point P on the side surface 14, reference character T denotes a straight line that is parallel to the tyre axis, and reference character Θ denotes the above-described inclination angle. Since it is assumed that the curvature of the side surface 14 is created by translating the illustrated circular arc-shaped curve parallel to the radial direction of the annular metal mould, the tangential plane F is illustrated as a tangential line with respect to the above-mentioned circular arc-shaped curve.

Side surfaces of the metal sector mould 2 serving as joining surfaces are formed from the side surfaces 14 and 15 themselves of subsidiary parts 3.

A reinforcement part 4 for supporting a plurality of subsidiary parts 3 as described above at their rearside is provided for each metal sector mould. In the reinforcement part 4 is formed an inner circumferential groove having a cross-sectional configuration matching that of the subsidiary parts 3 as stacked in two courses in the manner shown in Figure 4. The reinforcement member 4 holds the subsidiary parts 3 while clamping their upper and lower surfaces 12 and 13 which are inclined inwardly with respect to each other as described above, from above and below. Accordingly, when the subsidiary parts 3 are to be fitted into the reinforcement part 4, the subsidiary parts 3 are inserted in a channel provided on the side surface of the reinforcement part 4.

Side surfaces 20 where individual reinforcement parts 4 abut against each other are somewhat different from the side surfaces 14, 15 of the subsidiary parts 3 and are shown in Figure 8 which is a rear view of the portion of a metal sector mould at one end thereof showing, extending from the end of the metal sector, mould recesses and protrusions which are formed relatively smoothly.

These end surfaces 20 are formed in such manner that a maximum displacement width d from the side surfaces 14 and 15 of the subsidiary part 3 of 5 mm or less may be made available.

A metal sector mould 2 is formed by fitting four subsidiary parts 3 into each of the upper and lower portions of such reinforcement part 4. A number of these metal sector moulds 2 is positioned separately in a radial manner as shown in Figure 2, then these are made to slide simultaneously towards a central position and the Joining surfaces of the metal sector moulds respectively consisting of the side surfaces 14 and 15 of the subsidiary parts 3 and the side surfaces 20 of the reinforcement parts 4 are made to abut against one another to construct the annular metal mould 1 shown in Figure 1.

Since the radius of curvature on the curved parts of the side surfaces 14 and 15 of the smaller parts 3 is limited to 5 mm or less and the inclination angle Θ of the tangential plane is limited to 80 degrees or less, there is no place where a part of the surface protrudes extremely,and also the displacement width d from the side surface 20 of the reinforcement part 4 is also limited to 5 mm or less. Accordingly, the inconvenience that when the metal sector moulds 2 are contiguous to one another and are made to slide towards the centre and their side surfaces abut one another, with the Joining surfaces of the metal sector moulds 2 then partly interfering with one another and risking being damaged, or the sliding movement simply cannot be achieved smoothly, can be prevented.

With regard to the subsidiary parts 3, since a large number of subsidiary parts 3 all having the same configuration is preliminarily individually manufactured, preliminary manufacture is easier than manufacturing the smaller parts by cutting an annular metal mould, and hence reduction of cost can be achieved.

It is to be noted that modifications to this form of mould can be made in respect of the kinds of subsidiary parts made such as by giving them alternative protrusion patterns, so that although the general configuration is the same, the pattern of joins is partly varied.

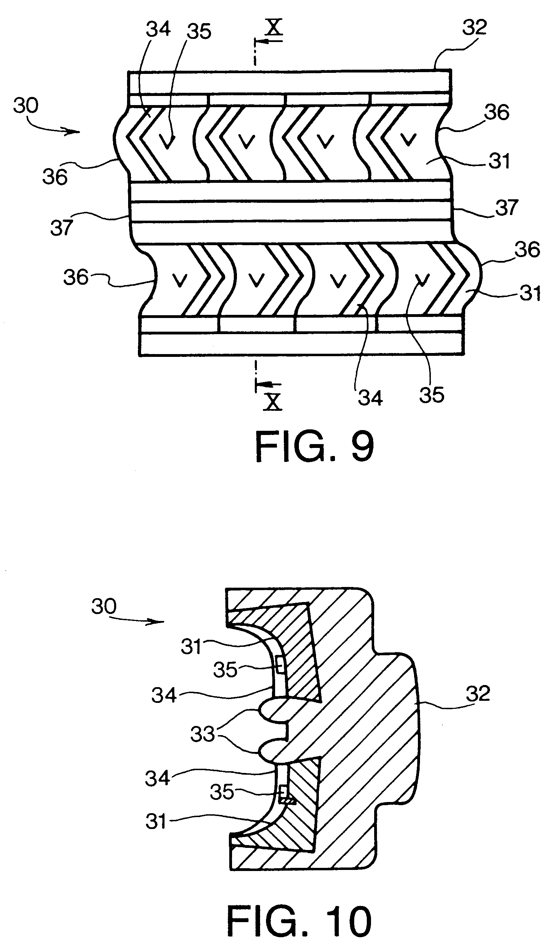

While the whole of the tyre tread portion is defined by the subsidiary parts 3 in the above-described preferred embodiment, it may be modified so that a part of the tyre tread is defined by the reinforcement part. One example of such modification is shown in Figures 9 and 10.

Figures 9 and 10 are a front view and a cross-sectional view of a metal sector mould 30. A protrusion 33 is formed on the rear surface of a reinforcement part 32 for supporting subsidiary parts 31 and runs along the centre of the inner circumferential surface of the mould. The subsidiary parts 31 are fitted in upper and lower grooves partitioned from each other by the protrusion 33.

When subsidiary parts 31 having the same configuration are fitted in the upper and lower grooves, respectively, the projecting end portions of the protrusion 33 form part of a protrusion pattern with the protrusion 34 and blades 35 of the subsidiary parts 31.

Should it be more advantageous to machine a portion of the reinforcement part 32 so that the protrusion pattern is partly provided by the reinforcement part 32, than to machine the subsidiary parts so that the protrusion pattern may be provided only by the subsidiary parts, a metal mould having the above-described construction is conceivable. In this case, the metal sector mould Joining surfaces abutting against each other are formed with the side surfaces 36 of the subsidiary parts 31 and side surfaces 37 of the protrusions 33 of the reinforcement part 32.

## Claims

1. A metal mould (1) for use in vulcanizing a tyre emplaced therein, the mould having an annular metal mould portion for forming the tread of a tyre and constructed by assembling a plurality of metal sector moulds (2) around the circumference of the mould, the mould having all or some of said metal sector moulds (2) constructed of a plurality of subsidiary parts (3) separable from each other in the axial direction as well as the circumferential direction; characterised in that end surfaces of said plurality of subsidiary parts (3) are formed as contour surfaces (14, 15) in arbitrary non-planar shapes extending across the mould to avoid severing any tyre tread-defining mould portion and at which surfaces said subsidiary parts are fitted together, said contour surfaces also defining joining surfaces between said metal sector moulds (2).

2. A metal mould as claimed in claim 1, wherein said contour surfaces are curved surfaces (14,15), which are curved such that at every point on said curved surfaces the surface has a radius of curvature of 5 mm or larger and an inclination (θ) of a tangential plane (F) with respect to the tyre axis (T) which is 80 degrees or less.

3. A metal mould as claimed in claim 1 or 2, wherein any one said metal sector mould (2) constructed of a said plurality of subsidiary parts (3) comprises a reinforcement part (4) integrally supporting and reinforcing the subsidiary parts at their rear surfaces.

4. A metal mould as claimed in Claim 3, wherein the position where a contour surface (14) of a subsidiary part of one metal sector mould adjoins a contour surface (15) of a subsidiary part of an adjacent metal sector mould is out of alignment with the position where a joining surface (20) of a reinforcement part adjoins a joining surface of adjacent reinforcement part circumferentially adjacent thereto to an extent of 5 mm or less at any position therealong.

5. A method for manufacture of a tyre vulcanizing metal mould, the mould having an annular metal mould portion for forming the tread of a tyre and formed of a plurality of metal sector moulds (2) around the circumference of the mould, the mould having all or some of said sector metal moulds (2) constructed of a plurality of subsidiary parts (3) separable from each other in the axial direction as well as the circumferential direction, characterised by the steps of initially providing a plurality of subsidiary parts (3), the subsidiary parts having end surfaces formed as contour surfaces (14, 15) in arbitrary non-planar shapes for extending across the mould to avoid severing any tyre tread-defining mould portion, and assembling said metal sector moulds (2) with a plurality of said subsidiary parts (3) on some or all thereof into an annularly shaped body comprising the subsidiary parts arranged thereon with subsidiary part contour end surfaces in abutment with one another thereby to define the annular metal mould (1).

6. A method as claimed in claim 5, comprising the additional step of fitting said subsidiary parts (3) into reinforcement parts (4) to form said metal sector moulds (2), and assembling said metal sector moulds (2) in abutment with one another thereby to define the annular metal mould (1).

## Patentansprüche

1. Metallform (1) zum Gebrauch beim Vulkanisieren eines in der Form angeordneten Reifens, wobei die Form einen ringförmigen Metallformabschnitt zum Ausbilden des Reifenprofils aufweist und durch das Zusammensetzen einer Anzahl Metallformsektoren (2) entlang des Umfangs der Form aufgebaut wird, und einige oder alle Metallformsektoren (2) der Form aus einer Anzahl Hilfsteile (3) aufgebaut sind, die sowohl in axialer Richtung als auch in Umfangsrichtung voneinander trennbar sind,
dadurch gekennzeichnet, daß Endflächen der Anzahl Hilfsteile (3) als Konturflächen (14, 15) mit willkürlich unebener Gestalt ausgebildet sind, die sich über die Form erstrecken, um zu verhindern, daß irgendein Formabschnitt durchtrennt wird, der das Reifenprofil bestimmt, und daß die Hilfsteile an diesen Flächen zusammengesetzt werden, und daß die Konturflächen auch Grenzflächen zwischen den Metallformsektoren (2) bestimmen.

2. Metallform nach Anspruch 1, wobei die Konturflächen gekrümmte Flächen (14, 15) sind, die so gekrümmt sind, daß an jedem Punkt der gekrümmten Flächen die Fläche einen Krümmungsradius von 5 mm oder mehr hat und eine Neigung (θ) einer Tangentialebene (F) bezüglich der Reifenachse (T), die 80 Grad oder weniger beträgt.

3. Metallform nach Anspruch 1 oder 2, wobei irgendein Metallformsektor (2), der aus der Anzahl Hilfsteile (3) aufgebaut ist, ein Verstärkungsteil (4) enthält, das die Hilfsteile an ihren rückwärtigen Flächen gemeinsam trägt und verstärkt.

4. Metallform nach Anspruch 3, wobei die Stelle, an der eine Konturfläche (14) eines Hilfsteils eines Metallformsektors an eine Konturfläche (15) eines Hilfsteils eines benachbarten Metallformsektors grenzt, gegen die Stelle versetzt ist, an der eine Grenzfläche (20) eines Verstärkungsteils an eine Grenzfläche eines benachbarten Verstärkungsteils grenzt, das am Umfang benachbart ist, und zwar um 5 mm oder Weniger an jeder Stelle des Umfangs.

5. Verfahren zum Herstellen einer Metallform zum Vulkanisieren von Reifen, wobei die Form einen ringförmigen Metallformabschnitt aufweist, um das Profil eines Reifens auszubilden, und der Metallformabschnitt von einer Anzahl Metallformsektoren (2) entlang des Formumfangs gebildet wird, und einige oder alle Metallformsektoren (2) der Form aus einer Anzahl Hilfsteile (3) aufgebaut sind, die sowohl in axialer Richtung als auch in Umfangsrichtung voneinander trennbar sind,
gekennzeichnet durch die Schritte:
Bereitstellen einer Anzahl Hilfsteile (3) zu Beginn, wobei die Hilfsteile Endflächen aufweisen, die als Konturflächen (14, 15) mit willkürlich unebener Gestalt ausgebildet sind und sich über die Form erstrecken, damit kein profilbestimmender Formabschnitt durchschnitten wird, und
Zusammenbauen der Metallformsektoren (2), wobei sich auf einigen oder allen Metallformsektoren eine Anzahl Hilfsteile (3) befinden, zu einem ringförmigen Körper, der die darauf angeordneten Hilfsteile umfaßt, deren Konturendflächen aneinander anstoßen und dadurch die ringförmige Metallform (1) bestimmen.

6. Verfahren nach Anspruch 5, umfassend den zusätzlichen Schritt des Einfügens der Hilfsteile (3) in Verstärkungsteile (4), um die Metallformsektoren (2) zu bilden, und Zusammenbauen der Metallformsektoren (2), so daß sie aneinander anstoßen und dadurch die ringförmige Metallform (1) bestimmen.

## Revendications

1. Moule métallique (1) à utiliser pour vulcaniser un pneumatique placé dans ce dernier, le moule comprenant une partie de moule métallique annulaire destinée à former la bande de roulement d'un pneumatique, construite par assemblage d'une pluralité de secteurs de moule métalliques (2) tout autour de la circonférence du moule, le moule ayant tous ses secteurs de moule métalliques (2), ou certains d'entre eux, qui sont faits d'une pluralité de parties de subdivision (3) pouvant être séparées les unes des autres aussi bien dans la direction axiale que dans la direction de la circonférence,
caractérisé en ce que les surfaces d'extrémité des parties de subdivision (3) de ladite pluralité sont formées comme des surfaces à profil courbe (14, 15), avec des formes arbitraires non planes, qui s'étendent transversalement au moule pour éviter le détachement de toute partie de moule définissant la bande de roulement, lesdites parties de subdivision étant fixées ensemble au niveau desdites surfaces et lesdites surfaces à profil courbe définissant aussi des surfaces de jonction entre lesdits secteurs de moule métalliques (2).

2. Moule métallique selon la revendication 1, dans lequel lesdites surfaces à profil courbe sont des surfaces courbes (14, 15) qui sont courbées de telle sorte qu'en tout point desdites surfaces courbes la surface a un rayon de courbure de 5 mm ou plus et une inclinaison (θ) du plan tangentiel (F) par rapport à l'axe (T) du pneumatique qui vaut 80 degrés ou moins.

3. Moule métallique selon la revendication 1 ou 2, dans lequel tout secteur de moule métallique (2) fait de ladite pluralité de parties de subdivision (3) comprend une pièce de renfort (4) qui, d'un seul tenant, supporte et renforce les parties de subdivision au niveau de leur face arrière.

4. Moule métallique selon la revendication 3, dans lequel l'endroit oil une surface à profil courbe (14) d'une partie de subdivision d'un secteur de moule métallique rejoint la surface à profil courbe (15) d'une partie de subdivision d'un secteur de moule métallique adjacent est décalée de l'endroit où une surface de jonction (20) d'une pièce de renfort rejoint la surface de jonction d'une pièce de renfort adjacente à celle-ci dans le sens de la circonférence d'une distance de 5 mm ou moins, en toute position le long de celle-ci.

5. Procédé de fabrication d'un moule métallique de vulcanisation de pneumatiques, le moule comprenant une partie de moule métallique annulaire servant à former la bande de roulement du pneumatique et constituée d'une pluralité de secteurs de moule métallique (2) tout autour de la circonférence du moule, le moule ayant tous ses secteurs de moule métalliques (2), ou certains d'entre eux, qui sont faits d'une pluralité de parties de subdivision (3) pouvant être séparées les unes des autres aussi bien dans la direction axiale que dans la direction de la circonférence,
caractérisé par les étapes consistant à préparer initialement une pluralité de parties de subdivision (3), les surfaces d'extrémité des parties de subdivision étant formées comme des surfaces à profil courbe (14, 15) avec des formes arbitraires non planes qui s'étendent transversalement au moule pour éviter le détachement de toute partie de moule définissant la bande de roulement, et à assembler lesdits secteurs de moule métalliques (2) avec lesdites parties de subdivision (3) de tous ceux-ci, ou de certains d'entre eux, pour donner un corps de forme annulaire comprenant, disposées sur ce dernier, les parties de subdivision, lesdites surfaces à profil courbe des parties de subdivision étant placées bout à bout pour définir le moule métallique annulaire (1).

6. Procédé selon la revendication 5, comprenant l'étape supplémentaire consistant à fixer lesdites parties de subdivision (3) dans des pièces de renfort (4) pour former lesdits secteurs de moule métalliques et à assembler lesdits secteurs de moule métalliques (2) bout à bout pour définir le moule métallique annulaire (1).
